# EUROPEAN PATENT SPECIFICATION

(11) **EP 4 600 157 B1**
(45) Date of publication and mention of the grant of the patent: **30.09.2026**
(21) Application number: 25151740.5
(22) Date of filing: 14.01.2025
(51) Int. Cl.: B64D 43/00, G01C 23/00, G06F 3/14, G01D 7/02

(54) **AIRCRAFT SYSTEMS AND METHODS FOR MONITORING DISPLAYED OPERATIONAL PARAMETERS**
FLUGZEUGSYSTEME UND VERFAHREN ZUR ÜBERWACHUNG ANGEZEIGTER BETRIEBSPARAMETER
SYSTÈMES ET PROCÉDÉS D'AÉRONEF POUR SURVEILLER DES PARAMÈTRES OPÉRATIONNELS AFFICHÉS

(30) Priority: 07.02.2024 IN 202411008243; 06.05.2024 US 202418656219
(43) Date of publication of application: 13.08.2025
(73) Proprietor: Honeywell International Inc., Charlotte, NC 28202 (US)
(72) Inventor: ALLADI, Abhishek, Charlotte, 28202 (US); DESU, Damadora VenkataHanumantha Rao, Charlotte, 28202 (US); KOILPILLAI, George, Charlotte, 28202 (US); PARAMASIVAM, Prameela, Charlotte, 28202 (US); P, Shashi Kumar, Charlotte, 28202 (US)
(74) Representative: Ingrassia, Fisher & Lorenz UK Ltd.

(56) References cited:
- EP-A1- 3 407 260
- WO-A1-2023/111820
- CA-A1- 3 026 758

## Description

### CROSS REFERENCE TO RELATED APPLICATION

This application claims priority to India Provisional Patent Application No. 202411008243, filed February 7, 2024.

### TECHNICAL FIELD

The subject matter described herein relates generally to aircraft systems, and more particularly, embodiments of the subject matter relate to monitoring displays concurrently presented on different devices in a redundant system.

### BACKGROUND

Modern electronic displays for vehicles (such as aircraft, automobiles, marine vessels, or trains) display a considerable amount of information, such as vehicle position, navigation and terrain information. In the case of an aircraft, many modern flight deck displays (or cockpit displays) are utilized to provide a number of different displays from which the user can obtain information or perform functions related to, for example, navigation, flight planning, guidance and navigation, and performance management. Modern aircraft often include one or more displays arranged or placed directly in front of a pilot or co-pilot, alternatively referred to as forward displays since they are viewable in the forward line-of-sight, along with separate displays arranged or placed adjacent to or in between a pilot and co-pilot, which may alternatively be referred to as head down displays.

In aviation contexts or other safety critical applications, it is desirable to provide redundancy and fail operational systems. For example, an aircraft may include redundant sensors or other data sources that provide separate streams of data to redundant processing and display systems responsible for rendering different displays, such as, for example, a left side (or pilot display) and a right side (or copilot display) within the cockpit of the aircraft. Logical comparisons have been utilized to compare data to identify discrepancies and notify pilots of potential anomalies. Critical symbol monitors may also be utilized to verify that text, shapes, lines or other symbols are rendered as intended. However, given the amount of intervening data processing applied to the data output by the sensor or other data source, it is desired to provide a method and system for monitoring post-processing discrepancies between redundant data streams. Other desirable features and characteristics will become apparent from the subsequent detailed description and the appended claims, taken in conjunction with the accompanying drawings and the foregoing technical field and background.

WO2023/111820 A1 is background art.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Vehicle systems and methods are provided for monitoring images generated by a second processing system redundant to a first processing system. An exemplary method involves identifying a measured value for a parameter based on sensor data obtained via a sensing arrangement, extracting, from a first frame of image data generated by the first processing system for presentation on a first display device, a first plurality of characters displayed within the first frame, extracting, from a second frame of second image data generated by the second processing system for presentation on a second display device concurrent to the first frame of image data, a second plurality of characters displayed within the second frame, verifying the first plurality of characters includes a first set of one or more displayed characters corresponding to the measured value, and after verifying the first plurality of characters includes the first set of one or more displayed characters corresponding to the measured value, verifying whether the second plurality of characters includes a second set of one or more displayed characters corresponding to the first set of one or more displayed characters and generating an alert in response to an absence of the second set of one or more displayed characters corresponding to the first set of one or more displayed characters within the second plurality of displayed characters.

An apparatus for a computer-readable medium is also provided. The computer-readable medium has computer-executable instructions stored thereon that, when executed by a processing system, cause the processing system to identify a measured value for a parameter based on sensor data obtained via a sensing arrangement, extract, from a first frame of image data generated by a first processing system for presentation on a first display device, a first plurality of characters displayed within the first frame, extract, from a second frame of second image data generated by a second processing system for presentation on a second display device concurrent to the first frame of image data, a second plurality of characters displayed within the second frame, verify the first plurality of characters includes a first set of one or more displayed characters corresponding to the measured value, and after verifying the first plurality of characters includes the first set of one or more displayed characters corresponding to the measured value, verify whether the second plurality of characters includes a second set of one or more displayed characters corresponding to the first set of one or more displayed characters and generate an alert in response to an absence of the second set of one or more displayed characters corresponding to the first set of one or more displayed characters within the second plurality of displayed characters.

A method of monitoring a co-pilot forward display generated by a second processing system redundant to a first processing system generating a pilot forward display is also provided. The method involves identifying a measured value for a parameter based on sensor data obtained via a sensing arrangement, extracting, from a first frame of image data of the pilot forward display generated by the first processing system for presentation on a first display device on a pilot side of a cockpit of an aircraft, a first plurality of characters displayed within the first frame, verifying the first plurality of characters includes a character subset comprising one or more displayed characters matching the measured value, extracting, from a second frame of image data of the co-pilot forward display generated by the second processing system for presentation on a second display device on a co-pilot side of the cockpit, a second plurality of characters displayed within the second frame, and automatically generating an alert in response to an absence of a second character subset within the second plurality of characters that matches the character subset matching the measured value from the pilot forward display.

Furthermore, other desirable features and characteristics of the subject matter described herein will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram illustrating a redundant vehicle system suitable for use with an aircraft in accordance with one or more exemplary embodiments;
FIG. 2 is a flow diagram of a character monitoring process suitable for use with the redundant system of FIG. 1 in accordance with one or more exemplary embodiments; and
FIG. 3 depicts an exemplary cockpit display environment suitable for use with the character monitoring process of FIG. 2 in the redundant system of FIG. 1 in accordance with one or more exemplary embodiments.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to systems and methods for monitoring characters or other symbology concurrently displayed on graphical user interface (GUI) displays to verify the graphical representations of operational information depicted on those GUI displays matches and generate a corresponding alert when there is a mismatch between GUI displays. For purposes of explanation, the subject matter is described herein primarily in the context of monitoring GUI displays depicted on a flight deck display, an electronic flight bag (EFB) or other cockpit display onboard an aircraft in an aviation context, such as, for example, pilot and co-pilot GUI displays on different sides of the cockpit that are generated and rendered by separate processing systems using separate data sources or data streams that are redundant to one another. However, it should be understood that the subject matter described herein is not necessarily limited to use with aircraft or other vehicle systems or applications, or any particular type or configuration of sensors or data sources, and may be similarly utilized in other applications, systems or environments, including, but not limited to use with other types of vehicles (e.g., automobiles, marine vessels, trains, etc.).

As described in greater detail below, in exemplary implementations, the subject matter described herein is employed to verify consistency of pilot and co-pilot GUI displays that are generated using separate and redundant processing paths, which may be implemented using commercial off-the-shelf central processing units (CPUs) and graphics processing units (GPUs). Characters or other symbology are extracted from frames of image data generated by a first processing system for presentation on a pilot side (or left side) display device, while corresponding characters or other symbology are extracted from frames of image data generated by a second processing system for presentation on a co-pilot side (or right side) display device. After verifying the extracted characters from the pilot side GUI display match or otherwise correspond to a measured value for a parameter based on sensor data obtained via a sensing arrangement or other data source, a display monitoring service verifies that the extracted characters from the co-pilot side GUI display include corresponding displayed characters that match those extracted displayed characters from the pilot side GUI display that match the measured value for the parameter. In this manner, the display monitoring service ensures that both the pilot side and co-pilot side GUI displays include displayed characters or other symbology that match one another while also matching a measured value for the parameter. In response to an absence of a matching set of displayed characters on the co-pilot side GUI display corresponding to the displayed characters on the pilot side GUI display matched to the sensor data, the display monitoring service generates an alert that notifies the pilot and/or the co-pilot of the mismatch between GUI displays, so that the pilot and/or the co-pilot can mitigate or otherwise resolve the mismatch (e.g., by relying on instruments or other sources for the information rather than the GUI displays).

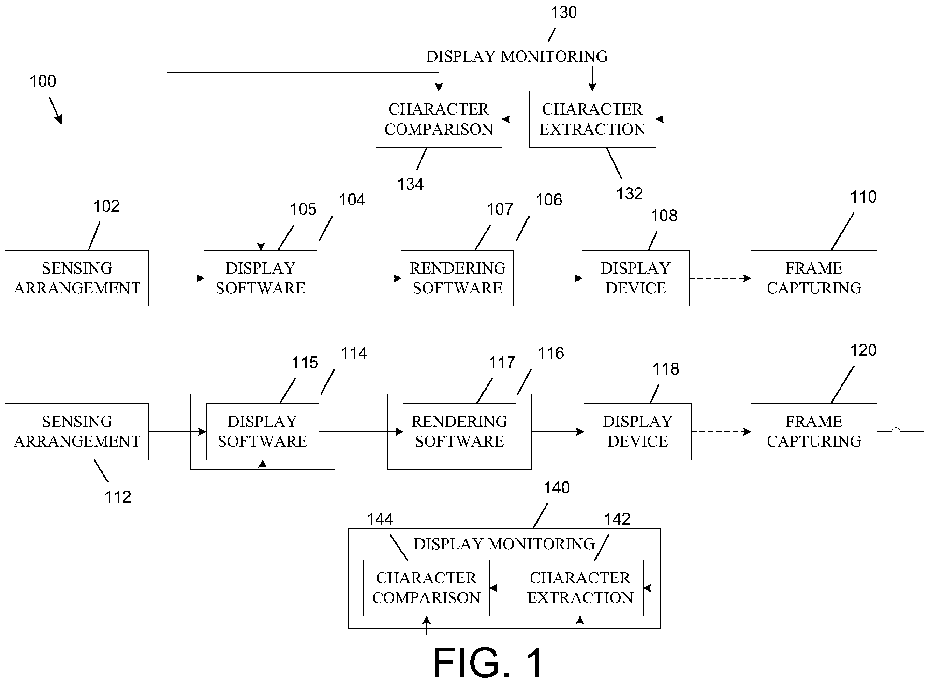

FIG. 1 depicts an exemplary embodiment of a redundant system 100 suitable for use with a vehicle, such as an aircraft, to provide redundant GUI displays on separate and distinct display devices 108, 118 while monitoring the displayed characters and potentially symbology presented on the display devices 108, 118 to verify there is no mismatch between displayed characters intended to correspond to the same measured value for a particular parameter, where those displayed characters are generated based on sensor data from redundant sensing arrangements 102, 112 or other data sources (e.g., redundant avionics systems or the like). For purposes of explanation, the system 100 of FIG. 1 is described herein in the context of an aircraft, where the first display device 108 corresponds to a display device positioned on the left side of the cockpit cabin for viewing by the pilot in command of the aircraft and the second display device 118 corresponds to a display device positioned on the right side of the cockpit cabin for viewing by a co-pilot or other user onboard the aircraft. For example, the pilot side display device 108 may be realized as a forward-looking display (e.g., a primary flight display (PFD)), a head-up display or another forward display integrated into the left side of the cockpit flight deck, while the co-pilot side display device 118 may be similarly realized as a forward display integrated into the right side of the cockpit flight deck. That said, it should be appreciated that the system 100 is not limited to use with aircraft and may be implemented in the context of other vehicles, systems or applications.

The first processing path associated with the pilot side display device 108 includes a sensing arrangement 102 that provides sensor data indicative of a measured value for a parameter, property or other environmental condition related to operation of the aircraft to a processing system 104. The processing system 104 executes, implements or otherwise includes display software 105 configurable to process the sensor data, in addition to potentially other input data from other data sources, and perform various logical operations on the input data to generate image data for presentation on the pilot display device 108 that includes one or more graphical representations or other symbology indicative of the measured value for the operational parameter that is based on or otherwise influenced by the sensor data. The image data generated by the display software 105 is output or otherwise provided to a graphics processing system 106 that is coupled to the pilot side display device 108 executes, implements or otherwise includes a rendering software application 107 (or rendering engine) that is configurable to generate a GUI display on the pilot side display device 108 that corresponds to the image data provided by the processing system 104, such that the GUI display includes the graphical representations or other symbology indicative of the measured value generated by the display software 105.

The second processing path associated with the co-pilot side display device 118 is separate from and redundant to the processing path associated with the pilot side display device 108, and the co-pilot side processing path similarly includes a redundant sensing arrangement 112 that provides sensor data indicative of a measured value for the same parameter, property or other environmental condition as the first sensing arrangement 102. A second processing system 114 redundant to the first processing system 104 executes, implements or otherwise includes a corresponding instance of display software 115 configurable to process the sensor data, in addition to potentially other input data from other data sources, and perform various logical operations on the input data to generate image data for presentation on the pilot display device 108. In this regard, the image data generated by the display software 115 similarly includes one or more graphical representations or other symbology indicative of the measured value for the operational parameter that is based on or otherwise influenced by the sensor data, but the display software 115 may be configurable to generate the image data for a co-pilot GUI display, where the positions of those graphical representations and symbology within the co-pilot GUI display on the co-pilot side display device 118 may be different from the positions of those corresponding graphical representations and symbology within the pilot GUI display on the pilot side display device 108.

In a similar manner as described above, the image data generated by the display software 115 is output or otherwise provided to a second graphics processing system 116 that is coupled to the co-pilot side display device 118 executes, implements or otherwise includes rendering engine 117 that is configurable to generate a GUI display on the co-pilot side display device 118 that corresponds to the image data provided by the processing system 114, such that the GUI display includes the graphical representations or other symbology indicative of the measured value generated by the display software 115.

In exemplary implementations, the sensing arrangements 102, 112 include one or more sensors or other sensing elements capable of providing measured values or other sensor data indicative of a current state, characteristic or condition of a particular parameter that characterizes operation of the aircraft, the current operating environment surrounding the aircraft, or otherwise pertains to the operation of the aircraft, such as, for example, an altitude sensor to provide data indicative of a current altitude of the aircraft, a speed sensor to provide data indicative of a current speed of the aircraft, and/or the like. It should be appreciated that the subject matter described herein is not limited to any particular type or configuration of sensing arrangements 102, 112 and may be implemented in an equivalent manner in the context of any other suitable data source. In this regard, in some implementations, the sensing arrangements 102, 112 may be integrated or incorporated with another system onboard the aircraft, such as any sort of avionics system capable of providing data and/or information regarding the operation of the aircraft, such as, for example, a flight management system (FMS), a navigation system, a communications system, an autopilot system, an autothrust system, a weather system, an air traffic management system, a radar system, a traffic avoidance system, hydraulics systems, pneumatics systems, environmental systems, electrical systems, engine systems, trim systems, lighting systems, crew alerting systems, electronic checklist systems, an electronic flight bag and/or another suitable avionics system.

In exemplary implementations, the sensing arrangements 102, 112 are communicatively coupled to respective instances of redundant processing systems 104, 114 (e.g., via an avionics bus or other suitable data bus), where the processing systems 104, 114 generally represent the one or more processors, central processing units (CPUs), controllers, microprocessors, microcontrollers, processing cores and/or other hardware computing resources configured to support one or more display software applications 105, 115 that are configurable to process and convert the sensor data or other operational information provided by the sensing arrangements 102, 112 into corresponding image data for characters or other for symbology that is representative of or otherwise influenced by the measured values for the respective parameters indicated by the sensor data. For example, in the illustrated implementation, the processing system 104 executes or otherwise supports a display software application 105 that converts real-time sensor data and/or information regarding the operation of the aircraft that is provided by the sensing arrangement 102 into corresponding characters or symbols that depict or otherwise graphically represent the measured values indicated by the sensor data from the sensing arrangement 102. In a similar manner, the processing system 114 executes or otherwise supports a display software application 115 that converts real-time sensor data and/or information regarding the operation of the aircraft that is provided by the sensing arrangement 112 into corresponding characters or symbols that depict or otherwise graphically represent the measured values indicated by the sensor data from the sensing arrangement 112.

In one or more implementations, the image data generated by the display software applications 105, 115 includes display commands for rendering the characters or other symbology representative of the sensor data that are provided to a respective graphics processing system 106, 116, which generally represents a graphical processing unit (GPU) or other hardware computing resources associated with the respective processing path that is capable of executing a respective instance of a rendering engine 107, 117 that receives the image data or other indicia of the characters or symbols commanded to be drawn by the display software 105, 115 and generates corresponding frames of pixel data that are sequentially output or otherwise provided as a video stream to the respective display device 108. For example, the pixel data for a given frame may include color intensity values and pixel location coordinates denoting location of the pixels with respect to the display area of the display device 108, 118, where the rendering engine 107, 117 generating corresponding pixel data and pixel location coordinates for each pixel in the image to be displayed on the display device 108, 118 corresponding to the image data received from the respective processing system 106, 116. In practice, the graphics processing system 106, 116 may include a pixel buffer or frame buffer that can be read out and provided to a display driver for rendering the frame of pixel data for a GUI display on a display device 108, 118. In this regard, the display driver generally represents the circuitry and/or other hardware that is configurable to provide an interface between the video stream output of the rendering engine 107, 117 and the video stream input to the respective display device 108, 118 to convert the video frame pixel data or other received video input into corresponding electrical signals with the appropriate signal characteristics that cause the respective display device 108, 118 to display, depict or otherwise generate the desired symbology for the respective video frames of the video stream. In this regard, in exemplary implementations, the display devices 108, 118 are realized as an electronic display capable of graphically displaying flight information or other data associated with operation of the aircraft generated by a respective graphics processing system 106, 116 under control of the display software 105, 115 executing at the respective processing system 104, 114. Depending on implementation, a display device 108, 118 may be configured to support multi-colored or monochrome imagery, and could include or otherwise be realized using a liquid crystal display (LCD), a light emitting diode (LED) display, an organic light emitting diode (OLED) display, a heads-up display (HUD), a heads-down display (HDD), a plasma display, a projection display, a cathode ray tube (CRT) display, or the like.

In one or more implementations, the processing systems 104, 114 are implemented or otherwise realized using respective instances of a commercial-off-the-shelf (COTS) processor or other general purpose processing unit that includes a data storage element (or memory), which may be realized as any suitable non-transitory short or long term data storage or other computer-readable media, and/or any suitable combination thereof capable of storing code or other computer-executable programming instructions that, when executed by the respective processing system 104, 114, are configurable to cause the processing system 104, 114 to support or otherwise facilitate the display software application 105, 115 and related software services that are configurable to support the subject matter described herein. In a similar manner, in various implementations, the graphics processing systems 106, 116 are implemented or otherwise realized using respective instances of a COTS GPU configurable to execute, support or otherwise facilitate a rendering software application 107, 117 and related software services that are configurable to support the subject matter described herein.

Still referring to FIG. 1, the illustrated implementation includes respective instances of a display monitoring system 130, 140 that monitors images generated by the respective processing systems 104, 114 on the respective display devices 108, 118 to detect any mismatches between displayed characters (or the absence thereof) corresponding to the measured value for an operational parameter based on sensor data obtained via a respective sensing arrangement 102, 112. The display monitoring systems 130, 140 are communicatively coupled to frame capturing components 110, 120 to obtain respective frames of image data corresponding to the GUI displays generated on the respective display devices 108, 118 to verify the displayed characters or other symbology contained in the GUI displays matches, conforms or otherwise corresponds to the respective sensor data for the respective operational parameter. In other words, the display monitoring systems 130, 140 verify any displayed characters on the display devices 108, 118 that correspond to a measured value based on sensor data from a sensing arrangement 102, 112 match one another across display devices 108, 118 while also matching the output of the respective sensing arrangement 102, 112, to thereby verify the display software 105, 115, the rendering engines 107, 117, the processing systems 104, 114 and/or the graphics processing systems 106, 116 are functioning properly.

For example, in some implementations, the frame capturing components 110, 120 may include one or more cameras or other imaging devices configurable to capture image data corresponding to the displayed content on a respective display device 108, 118 and provide the respective frames of image data to the display monitoring systems 130, 140 for analysis. In other implementations, the frame capturing components 110, 120 may be implemented or otherwise realized as a software component configurable to read, extract, derive or otherwise obtain frames of image data generated by the display software 105, 115 from the output of the respective processing system 104, 114, the frame buffer of a respective graphics processing system 106, 116 and/or the output of a respective graphics processing system 106, 116. In this regard, it should be appreciated that the subject matter described herein is not limited to any particular means for capturing frames of image data that represent the GUI displays or other content displayed on a respective display device 108, 118 after processing by one or more intervening processing systems or software processes.

The pilot side display monitoring system 130 includes a character extraction service 132 that generally represents the process, service or other software component that receives or otherwise obtains captured frames of image data generated by the pilot side display software 105 at the pilot side processing system 104 from the pilot side frame capturing component 110 and analyzes the respective captured frames of image data to extract characters displayed within of that frame on the pilot side display device 108. For example, the character extraction service 132 may employ optical character recognition (OCR) or other suitable machine learning or artificial intelligence techniques to scan pixels of the captured image data frame to identify character boundaries, extract information pertaining to the respective subset of pixels contained within the character boundaries (e.g., to identify the size and shape of the character), and convert the extracted character pixels into a corresponding alphanumeric character or other textual representation.

In some implementations, the character extraction service 132 and/or the frame capturing components 110, 120 may be configurable to receive user input identifying the respective locations within the frames to be captured and/or analyzed for character extraction, such as, for example, reference start and end pixel locations to facilitate horizontal and vertical parsing of pixels (e.g., to effectively search the frame of image data for the pixels expected to contain characters). Additionally, or alternatively, the character extraction service 132 and/or the frame capturing components 110, 120 may utilize or employ an algorithm that is configurable to identify the respective locations within the frames to be analyzed. Thereafter, the character extraction service 132 parses or otherwise processes lines of pixels to identify the reference pixel locations for character extraction and further processing and/or analysis. After extracting the respective pixel subsets, OCR or other character recognition algorithms may be performed to identify and extract the displayed character values from the extracted subsets of pixel data.

In a similar manner, the character extraction service 132 receives or otherwise obtains captured frames of image data generated by the co-pilot side display software 115 at the co-pilot side processing system 114 from the co-pilot side frame capturing component 120 and analyzes the respective captured frames of image data to extract characters displayed within of that frame on the co-pilot side display device 118. The respective sets of displayed characters extracted from the respective captured frames of image data are provided to a character comparison service 134 that generally represents the process, service or other software component that receives or otherwise obtains sensor data or other measured values for the operational parameter(s) of interest from the pilot side sensing arrangement 102 and analyzes the sensor data or other measured values to verify corresponding displayed characters on the display devices 108, 118 match or otherwise correspond to the sensor data.

In exemplary implementations, the character comparison service 134 first verifies or otherwise confirms that the displayed characters extracted from the captured frame of image data for the pilot side display device 108 includes a set of one or more displayed characters that matches or otherwise corresponds to the measured value for the operational parameter indicative by the sensor data from the pilot side sensing arrangement 102. For example, if the pilot side sensing arrangement 102 is realized as an altimeter or other altitude sensing arrangement outputting sensor data indicative of a measured altitude value of 1000 feet, the character comparison service 134 verifies that the extracted characters include an instance of the numerical digit 1 along with three instances of the numerical digit 0 spatially arranged in proximity to one another or otherwise sequentially to correspond to a numerical value of 1000 being displayed on the display device 108. In some implementations, the character comparison service 134 may store or otherwise maintain metadata that may be utilized to map or otherwise correlate displayed characters extracted from a particular pixel location (or range thereof) to a particular object of interest or type of object associated with a particular measured value or operational parameter associated with a respective sensing arrangement 102. Additionally, the metadata may define a particular type of comparison be performed, depending on the particular object of interest or type of object associated with that particular sensing arrangement 102 or on-screen location, where different combinations or sequences of letters, numbers and/or other characters may have a different purpose or meaning depending on the particular location from which they were extracted. In this regard, in some implementations, the character extraction service 132 may be configured to automatically detect and effectively crop a sequence or grouping of characters to be compared to a particular sensing arrangement 102 output based on the associated metadata, where the character comparison service 134 verifies that the cropped grouping of characters matches or otherwise corresponds to the sensor data from the particular pilot side sensing arrangement 102 indicated by the metadata associated with that particular location on the GUI display.

When the displayed characters extracted from the captured frame of image data for the pilot side display device 108 does not include a set of displayed characters that matches or otherwise corresponds to the measured value for the operational parameter indicative by the sensor data from the pilot side sensing arrangement 102, the character comparison service 134 may automatically generate an alert to notify the pilot of a potential mismatch between the displayed image data and the underlying sensor data, for example, by generating an interrupt signal or provide another command to the display software 105 at the pilot side processing system 104 to cause the display software 105 to generate or otherwise provide a graphical user notification on the display device 108.

After verifying the displayed characters extracted from the captured frame of image data for the pilot side display device 108 includes a set of displayed characters matching the output of the sensing arrangement 102, the character comparison service 134 analyzes the displayed characters extracted from the captured frame of image data for the co-pilot side display device 118 to detect or otherwise identify whether the displayed characters extracted from the captured frame of image data for the co-pilot side display device 118 includes a matching set of displayed characters that correspond to a numerical value of 1000 to match the extracted set of displayed characters from the pilot side display device 108. In this regard, in exemplary implementations, by virtue of the configuration of the character extraction service 132, the character comparison service 134 analyzes the displayed characters extracted from the captured frame of image data for the co-pilot side display device 118 without regard to the position or location of where those characters were displayed on the co-pilot side display device 118, thereby allowing the co-pilot side display software 115 to position or otherwise display the characters or other symbology for a particular operational parameter at a different position or location for the co-pilot relative to where that information is presented for the pilot. For example, engine display of parameters (e.g., speed, turbine temperature and/or the like) may be displayed on right hand side of the pilot side GUI display on display device 108 while concurrently being displayed on the left hand side of the co-pilot side GUI display on the display device 118. In such implementations, the character extraction service 132 and the character comparison service 134 may be cooperatively configured to utilize configuration metadata to make the appropriate comparisons between extracted displayed characters for the engine parameters and the corresponding engine parameter sensor data independent of the respective locations where the engine display parameters are presented.

When the displayed characters extracted from the captured frame of image data for the co-pilot side display device 118 does not include a set of displayed characters that matches or otherwise corresponds to the displayed characters extracted from the captured frame of image data for the pilot side display device 108 previously matched to the measured value for the operational parameter indicative by the sensor data from the pilot side sensing arrangement 102, the character comparison service 134 may automatically generate an alert to notify the pilot of a potential mismatch between the displayed image data on the pilot side display device 108 and the co-pilot display device 118. For example, the character comparison service 134 may generate an interrupt signal or provide another command to the display software 105 at the pilot side processing system 104 to cause the display software 105 to generate or otherwise provide a graphical user notification on the display device 108 in graphical association with the displayed characters previously matched to the measured value for the operational parameter (e.g., by augmenting the frame of image data to be rendered to include alert symbology proximate the displayed characters corresponding to the measured value) to notify the pilot of a potential mismatch with respect to the image data that the co-pilot is currently being presented for that particular operational parameter. In various implementations, the character comparison service 134 may automatically generate an aural alert of the mismatch via an audio output device or other audio output interface coupled to the display monitoring system 130 and/or the processing system 104, such as any sort of speaker, headphone, earphone, earbud, or other suitable device capable of providing auditory output to a user (e.g., head-worn audio output device that is integrated with a headset to be worn by the pilot).

Still referring to FIG. 1, in a similar manner as described above in the context of the pilot side monitoring system 130, a corresponding instance of a co-pilot side monitoring system 140 includes a co-pilot side character extraction service 142 that analyzes the respective captured frames of image data from the respective frame capturing components 110, 120 to extract characters displayed within of the respective captured frames of image data and provide input to a character comparison service 144 that includes a first set of displayed characters extracted from the captured frame of image data for the co-pilot side display device 118 and a second set of displayed characters extracted from the captured frame of image data for the pilot side display device 108. A co-pilot side character comparison service 144 receives or otherwise obtains sensor data or other measured values for the operational parameter(s) of interest from the co-pilot side sensing arrangement 112 and analyzes the sensor data or other measured values to verify corresponding displayed characters on the display devices 108, 118 match or otherwise correspond to the sensor data.

In exemplary implementations, the co-pilot side character comparison service 144 first verifies or otherwise confirms that the displayed characters extracted from the captured frame of image data for the co-pilot side display device 118 includes a set of one or more displayed characters that matches or otherwise corresponds to the measured value for the operational parameter indicative by the sensor data from the co-pilot side sensing arrangement 112 and automatically generates an alert to notify the co-pilot of a potential mismatch between the displayed image data and the underlying sensor data when the displayed characters extracted from the captured frame of image data for the co-pilot side display device 118 does not include a set of displayed characters that can be matched to the sensor data from the co-pilot side sensing arrangement 112, in a similar manner as described above. After verifying the displayed characters extracted from the captured frame of image data for the co-pilot side display device 118 includes a set of displayed characters matching the output of the co-pilot side sensing arrangement 112, the co-pilot side character comparison service 144 analyzes the displayed characters extracted from the captured frame of image data for the pilot side display device 108 to detect or otherwise identify whether the displayed characters extracted from the captured frame of image data for the pilot side display device 108 includes a set of displayed characters that match the extracted set of displayed characters from the co-pilot side display device 118.

In a similar manner as described above, when the displayed characters extracted from the captured frame of image data for the pilot side display device 108 does not include a set of displayed characters that matches or otherwise corresponds to the displayed characters extracted from the captured frame of image data for the co-pilot side display device 118 previously matched to the measured value for the operational parameter indicative by the sensor data from the co-pilot side sensing arrangement 112, the character comparison service 144 automatically generates an alert to notify the co-pilot of a potential mismatch between the displayed image data on the pilot side display device 108 and the co-pilot display device 118. For example, the character comparison service 144 may generate an interrupt signal or provide another command to the co-pilot side display software 115 at the co-pilot side processing system 114 to augment the frame of image data to be rendered to include alert symbology or an other graphical user notification proximate the displayed characters corresponding to the measured value from the co-pilot side sensing arrangement 112 to notify the co-pilot of a potential mismatch with respect to the image data that the pilot is concurrently being presented for that particular operational parameter.

By virtue of the redundant display monitoring systems 130, 140, the system 100 is capable of verifying that the GUI displays or other imagery being presented to both the pilot and co-pilot include displayed characters that accurately reflect or otherwise correspond to the respective sensing arrangements 102, 112 or other data source for the respective processing path, and that the displayed characters effectively match one another across the display devices 108, 118, thereby ensuring that the respective instances of display software 105, 115 and rendering engines 107, 117 are functioning correctly and alerting the pilot and/or co-pilot substantially in real-time in the event of any mismatch or other anomaly between the relevant characters on the GUI displays. For example, for an aircraft application, rules, regulations, standard operating procedures and/or the like may require that particular parameters measured by onboard sensing arrangements be displayed on both pilot and co-pilot PFDs, such as, for example, altitude, speed, attitude, heading and/or the like. In such implementations, the character comparison services 134, 144 may be configurable to monitor the respective pilot and co-pilot PFD display devices 108, 118 to confirm the respective PFD GUI displays include displayed characters corresponding to the respective current measured values for those operational parameters based on sensor data from the respective sensing arrangements 102, 112 in real-time, and thereby ensure the display software 105, 115 and/or rendering engine 107, 117 is properly maintaining availability of accurate information for those operational parameters on the PFD GUI displays and promptly notify the pilot and co-pilot via aural and/or visual alerts in the event of any potential software and/or hardware anomalies that cause a mismatch between the displayed characters for those required operational parameters across the PFD GUI displays.

It should be noted that although FIG. 1 depicts the display monitoring systems 130, 140 as separate components, in various implementations, the display monitoring systems 130, 140 may be integrated or otherwise combined at a common component, or the display monitoring systems 130, 140 may be integrated or otherwise implemented at a respective processing system 104, 114 or another component to provide redundancy and avoid a single point of failure with respect to the display monitoring system 130, 140. In this regard, the respective services 132, 134, 142, 144 associated with the respective monitoring systems 130, 140 may be implemented as storing code or other computer-executable programming instructions stored on a non-transitory data storage element or other computer-readable media for execution by a respective processing system associated with the respective display monitoring system 130, 140 or a respective processing system 104, 114 associated with the respective processing path to be monitored. In this regard, FIG. 1 depicts a simplified representation of the system 100 for purposes of explanation and is not intended to be limiting. For example, in practice, the system 100 may include additional monitoring services or logic to compare the sensor data or other measurement values output by the respective sensing arrangements 102, 112 or other data sources to verify or otherwise confirm that there is no mismatch between the redundant sensing arrangements 102, 112 or other data sources providing redundant streams of input data to the respective processing systems 104, 114.

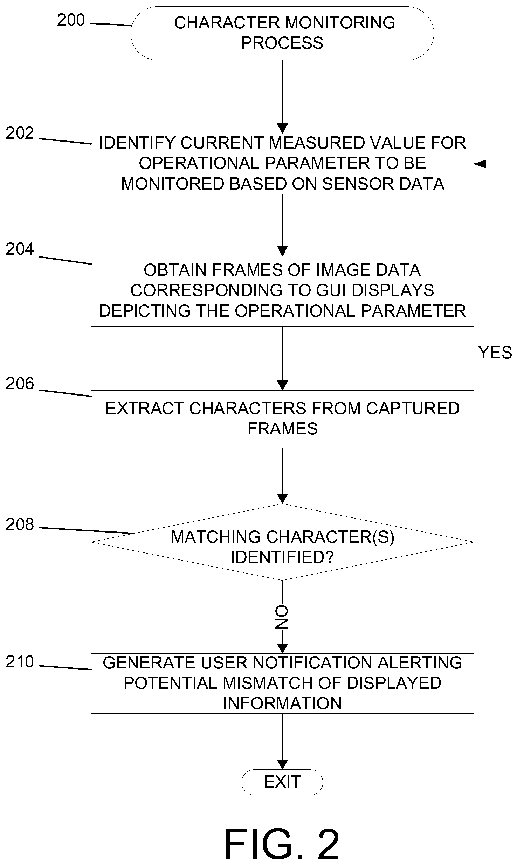

FIG. 2 depicts an exemplary embodiment of a character monitoring process 200 suitable for implementation in connection with an aircraft or other redundant system to validate concurrently presented GUI displays maintain availability or visibility of characters or other symbology corresponding to operational parameters required to be displayed and automatically alert a human operator in response to any mismatch or anomaly across the GUI displays. The various tasks performed in connection with the illustrated process may be implemented using hardware, firmware, software executed by processing circuitry, or any combination thereof. For illustrative purposes, the following description may refer to elements mentioned above in connection with FIG. 1. In practice, portions of the character monitoring process 200 may be performed by different elements of a system. That said, exemplary embodiments are described herein in the context of the character monitoring process 200 being primarily performed by the services 134, 134, 142, 144 implemented in connection with a respective display monitoring system 130, 140. It should be appreciated that the character monitoring process 200 may include any number of additional or alternative tasks, the tasks need not be performed in the illustrated order and/or the tasks may be performed concurrently, and/or the character monitoring process 200 may be incorporated into a more comprehensive procedure or process having additional functionality not described in detail herein. Moreover, one or more of the tasks shown and described in the context of FIG. 2 could be omitted from a practical embodiment of the character monitoring process 200 as long as the intended overall functionality remains intact.

The character monitoring process 200 initializes or otherwise begins by identifying, obtaining or otherwise determining the current measured value for a particular operational parameter being monitored based on the current or real-time sensor data for that parameter (task 202). For example, the character comparison service 134 at the display monitoring system 130 may sample the sensor data output from the pilot side sensing arrangement 102 substantially in sync with the processing system 104 and/or the display software 105 such that the character comparison service 134 obtains the same state or values for the sensor data that was relied on by the display software 105 when generating a corresponding graphical representation of the currently measured value for that particular operational parameter based on the sensor data. In this regard, the output of the sensing arrangement 102 functions as a source of truth for the display monitoring system 130 against which the GUI displays generated by the different instances of display software 105, 115 are to be compared.

The character monitoring process 200 continues by capturing, receiving or otherwise obtaining frames of image data corresponding to the active GUI displays to be monitored for concurrently depicting the particular operational parameter being monitored (task 204). For example, as described above, each redundant display device 108, 118 to be monitored for presentation of a particular required operational parameter may be associated with a respective frame capturing component 110, 120 configured to capture a frame of image data that corresponds to the GUI display or other content depicted on the respective display device 108, 118 at the time of capturing. In this regard, the frame capturing component 110, 120 may be configured to capture respective frames of image data at particular instances in time synchronized with the sampling of the sensor data output from the sensing arrangements 102, 112 such that the captured frames correspond to the respective sensor data that is obtained by the respective display software 105, 115 and/or character comparison services 134, 144 for monitoring. For example, one or more timers may be utilized to compare image data and/or sensor data at regular intervals to detect or otherwise identify any discrepancies and maintain synchronization between image data and sensor data being compared. Additionally, or alternatively, the sensor data frequency and image data frequency may be periodically monitored and compared to ensure image data and sensor data are substantially synchronized. In this regard, the frame capturing components 110, 120 and/or the sensing arrangements 102, 112 may be periodically recalibrated with respect to one another or synchronization timers may be periodically adjusted to maintain captured frames of image data synchronized with the sensor data output from the sensing arrangements 102, 112.

After capturing frames of image data for GUI displays that are expected to include a graphical representation of the particular operational parameter being monitored, the character monitoring process 200 extracts, detects or otherwise identifies a set of displayed characters within a respective GUI display from the captured frame of image data and then verifies or otherwise confirms that the displayed characters extracted from a respective GUI display include matching characters for the operational parameter depicted in one or more other ones of the GUI displays (tasks 206, 208). For example, as described above, the character comparison service 134 may perform OCR or other machine learning or artificial intelligence techniques to identify the alphanumeric characters contained within the captured frame of image data for the GUI display depicted on the pilot side display device 108 and then first verify or otherwise confirm that the pilot side GUI display depicted on the pilot side display device 108 includes a subset of those extracted displayed characters that matches or otherwise corresponds to the current or real-time measurement value for the particular operational parameter being monitored based on the sensor data provided by the sensing arrangement 102. After verifying that the pilot side GUI display includes an accurate subset of displayed characters that match or otherwise correspond to the current measured value for the particular operational parameter being monitored based on the sensor data, the character comparison service 134 may perform the same OCR, machine learning or other artificial intelligence techniques on the captured frame of image data for the co-pilot side GUI display to extract displayed characters from the co-pilot side GUI display and then verify or otherwise confirm that the co-pilot side GUI display depicted on the co-pilot side display device 118 includes a subset of those extracted displayed characters that matches or otherwise corresponds to the verified accurate subset of displayed characters depicted on the pilot side display device 108.

When the character monitoring process 200 verifies that the active GUI displays being monitored include displayed characters that accurately represent the current measured value for the operational parameter based on the sensor data for that operational parameter and that the GUI displays match one another to provide the desired redundancy and availability of that operational parameter, the character monitoring process 200 validates the GUI displays with respect to displaying that operational parameter. In this regard, the loop defined by tasks 202, 204, 206, 208 may be repeated to concurrently monitor any number of different operational parameters, and continually monitor the active GUI displays to ensure accuracy and availability of the depictions of those different operational parameters over time. For example, at the next sampling of or update to the sensor data output by the sensing arrangement 102, the display monitoring system 130 may repeat or otherwise reinitiate the character monitoring process 200 with respect to the new or updated measured value for that operational parameter based on the change in the sensor data output.

On the other hand, when the character monitoring process 200 identifies a mismatch between the monitored GUI displays for a particular operational parameter being monitored, the character monitoring process 200 automatically generates one or more user notifications alerting the pilot, co-pilot or other user or operator of a potential mismatch between the displayed value or graphical representation of that particular operational parameter and what was expected to be displayed based on the sensor data for that operational parameter (task 210). For example, when the co-pilot side GUI display does not include displayed characters that match the displayed characters of the pilot side GUI display that were matched to the sensor data output by the sensing arrangement 102, or when the pilot side GUI display does not include displayed characters that match to the sensor data output by the sensing arrangement 102, the character comparison service 134 may automatically generate an interrupt signal or other command to be provided to the processing system 104 or another device or system onboard the aircraft to trigger one or more user notifications. For example, as described above, the character comparison service 134 may provide a command or signal to the display software 105 that causes the display software 105 to augment the image data generated by the display software 105 to include alert symbology or some other graphical user notification to be rendered adjacent to, proximate to or otherwise in visual association with the graphical representation of the operational parameter for which the potential mismatch was detected to notify the pilot of the potential display discrepancy. Additionally, in various implementations, the character comparison service 134 provides a command or signal to an audio output device (or indirectly via the processing system 104) to automatically generate an aural alert of the potential display discrepancy with respect to the particular operating parameter being monitored. In this manner, the pilot and/or co-pilot may be notified substantially in real-time whenever a mismatch or discrepancy is detected between the pilot side and co-pilot side GUI displays with respect to a particular monitored operational parameter required to be displayed.

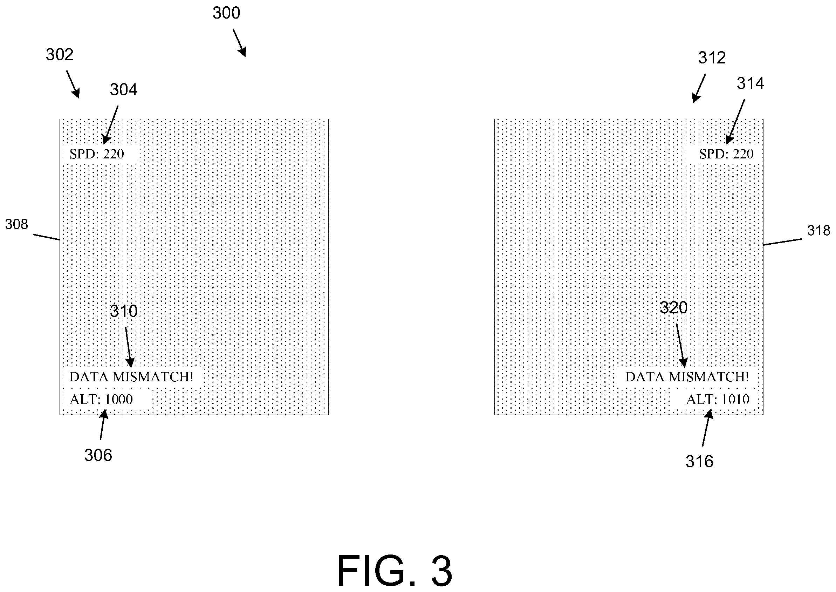

FIG. 3 depicts an exemplary representation of a forward-looking view of a cockpit display environment 300 suitable for use with the system 100 of FIG. 1 in connection with the character monitoring process 200 of FIG. 2. Referring to FIG. 3 with reference to FIGS. 1-2, the cockpit display environment 300 includes a pilot side forward GUI display 302 (e.g., a PFD or the like) on a display device 308 (e.g., display device 108) that is arranged on the left side of the cockpit display environment 300 when looking forward in the direction of forward travel of the aircraft and a co-pilot side forward GUI display 312 on a display device 318 (e.g., display device 118) that is arranged on the right side of the cockpit display environment 300. In this regard, the pilot side forward GUI display 302 may be generated by the pilot side display software 105 at the pilot side processing system 104, while the co-pilot side forward GUI display 312 is generated by the co-pilot side display software 115 at the co-pilot side processing system 114. In the illustrated example, the pilot side display software 105 is configured to display graphical representations 304, 306 of operational parameters on the pilot side forward GUI display 302 at relative positions or locations on the pilot side forward GUI display 302 that are different from the relative positions or locations where the co-pilot side display software 115 is configured to display graphical representations 314, 316 of those same operational parameters on the co-pilot side forward GUI display 312.

FIG. 3 depicts a scenario where the character monitoring process 200 has detected a mismatch between the displayed characters for the current measured value for the aircraft altitude and generated corresponding graphical user notifications 310, 320 on the respective forward GUI displays 302, 312. For example, the character comparison service 134 at the display monitoring system 130 may be configured to monitor the GUI displays 302, 312 for displayed characters or other symbology corresponding to the speed and altitude sensor data output by respective sensing arrangements 102 associated with the pilot side processing path. After obtaining the sensor data from respective sensing arrangements 102 and the captured frames of image data corresponding to the GUI displays 302, 312 from the respective frame capturing components 110, 120, the character extraction service 132 may extract a displayed set of characters from the pilot forward GUI display 302 that includes the character subsets of 220 and 1000 and extract a displayed set of characters from the co-pilot forward GUI display 312 that includes the character subsets of 220 and 1010 (e.g., tasks 202, 204).

As described above, the character comparison service 134 may perform OCR or other suitable techniques to identify the character subsets of 220 and 1000 from the extracted set of displayed characters from the pilot forward GUI display 302 (e.g., task 206). Based on speed sensor data indicative of the current measured speed value for the aircraft being equal to 220, the character comparison service 134 verifies that the pilot forward GUI display 302 includes a displayed character subset of 220 before verifying that the co-pilot forward GUI display 312 includes a displayed character subset of 220 that matches the pilot forward GUI display 302. After verifying and validating the displayed aircraft speed characters across the GUI displays 302, 312, based on altitude sensor data indicative of a current altitude value for the aircraft being equal to 1000, the character comparison service 134 verifies that the pilot forward GUI display 302 includes a displayed character subset of 1000. After verifying the pilot forward GUI display 302 accurately represents the altitude sensor data, the display monitoring service 130 also verifies that the graphical representation of the altitude sensor data depicted on the co-pilot forward GUI display 312 matches or otherwise corresponds to the graphical representation 306 of the altitude sensor data on the pilot forward GUI display 302. In this regard, in response to detecting an absence of a displayed character subset of 1000 within the extracted set of displayed characters from the co-pilot forward GUI display 312, the character comparison service 134 automatically generates a signal or command provided to the pilot side display software 105 that causes the pilot side display software 105 to augment the image data for the pilot side GUI display 302 to include a graphical user notification 310 or other alert symbology on the pilot side GUI display 302 adjacent to or otherwise in the vicinity of the graphical representation 306 of the altitude sensor data to notify the pilot of a potential mismatch between the displayed altitude value 306 on the pilot side GUI display 302 and what is being presented to the co-pilot.

In a similar manner, the display monitoring system 140 associated with monitoring the co-pilot side forward GUI display 312 may similarly detect or otherwise identify when the extracted displayed characters from the co-pilot side forward GUI display 312 includes a character subset for the altitude parameter that does not match the sensor data output by the co-pilot side altitude sensing arrangement 112, in scenarios when the altitude sensor data output corresponds to a measured altitude value of 1000, in which case the discrepancy indicated by the displayed altitude value 316 may be indicative of an anomalous condition with respect to one of the processing systems 114, 116 or other components of the co-pilot processing path. On the other hand, if the altitude sensor data from the co-pilot side altitude sensing arrangement 112 is indicative of a current altitude value for the aircraft being equal to 1010, after verifying the co-pilot forward GUI display 312 accurately represents the altitude sensor data from the co-pilot side altitude sensing arrangement 112 by including a displayed character subset of 1010, the character comparison service 144 automatically generates presentation of a graphical user notification 320 on the co-pilot forward GUI display 312 (e.g., via the co-pilot side display software 115) in response to detecting an absence of a matching displayed character subset of 1010 within the extracted set of displayed characters from the pilot forward GUI display 302. In this manner, both the pilot and co-pilot may be concurrently notified of any discrepancies within the redundant system 100 with respect to displayed operational parameters, thereby allowing the pilot and co-pilot to initiate one or more remedial actions to resolve or otherwise mitigate any discrepancies.

Still referred to FIGS. 1-3, in exemplary implementations, in addition to or in alternative to graphical user notifications 310, 320, the character monitoring process 200 is configurable to automatically generate one or more aural alerts in response to a mismatch across GUI displays to reduce the likelihood of overlooking any graphical alert due to display cluttering, current phase of flight and/or workload, or potential other factors. Moreover, the subject matter described herein provides high integrity display monitoring that compensates for potential situations where the sensor data is accurate and matches across redundant sensing arrangements but anomalous conditions with respect to processing systems or other software and/or hardware components associated with the processing path between when the sensor data is received and when the corresponding graphical representations are generated would otherwise result in a mismatch across the GUI displays. This, in turn, improves safety by providing early notification that allows the pilot, co-pilot or other crew members to initiate precautions that effectively reduce future workload that might otherwise occur at a later stage due to display mismatch or avoid a potential emergency.

For the sake of brevity, conventional techniques related to display systems, avionics systems, graphics processing systems, OCR, machine learning, artificial intelligence, character recognition, critical symbol monitoring and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of monitoring images generated by a second processing system redundant to a first processing system, the method comprising:
identifying a measured value for a parameter based on sensor data obtained via a sensing arrangement;
extracting, from a first frame of image data generated by the first processing system for presentation on a first display device, a first plurality of characters displayed within the first frame;
extracting, from a second frame of second image data generated by the second processing system for presentation on a second display device concurrent to the first frame of image data, a second plurality of characters displayed within the second frame;
verifying the first plurality of characters includes a first set of one or more displayed characters corresponding to the measured value; and
after verifying the first plurality of characters includes the first set of one or more displayed characters corresponding to the measured value:
verifying whether the second plurality of characters includes a second set of one or more displayed characters corresponding to the first set of one or more displayed characters; and
generating an alert in response to an absence of the second set of one or more displayed characters corresponding to the first set of one or more displayed characters within the second plurality of displayed characters.

2. The method of claim 1, wherein the first processing system is configurable to render the first set of one or more displayed characters corresponding to the measured value at a first location within the first frame of image data and the second processing system is configurable to render the second set of one or more displayed characters corresponding to the parameter at a second location within the second frame of second image data, wherein the first location and the second location are different.

3. The method of claim 1, wherein generating the alert comprises augmenting the image data generated by the first processing system to include a graphical user notification proximate the first set of one or more displayed characters corresponding to the measured value.

4. The method of claim 1, wherein generating the alert comprises augmenting the second image data generated by the second processing system to include a graphical user notification proximate the second set of one or more displayed characters corresponding to the measured value.

5. The method of claim 1, wherein generating the alert comprises generating an aural alert.

6. The method of claim 1, wherein:
extracting the first plurality of characters displayed within the first frame comprises performing character recognition on the first frame of image data to obtain the first plurality of characters; and
extracting the second plurality of characters displayed within the second frame comprises performing character recognition on the second frame of second image data to obtain the second plurality of characters.

7. The method of claim 6, wherein verifying the first plurality of characters includes the first set of one or more displayed characters corresponding to the measured value comprises identifying an extracted character subset within the first plurality of characters that matches the measured value for the parameter.

8. The method of claim 7, wherein verifying whether the second plurality of characters includes the second set of one or more displayed characters comprises validating the second frame of second image data in response to identifying a second extracted character subset within the second plurality of characters that matches the extracted character subset.

9. The method of claim 7, wherein generating the alert comprises generating the alert in response to an absence of a second extracted character subset within the second plurality of characters that matches the extracted character subset.

10. The method of claim 1, wherein the second processing system is configurable to generate the second image data for presentation on the second display device based on second sensor data obtained via a second sensing arrangement redundant to the sensing arrangement.

11. A method of monitoring a co-pilot forward display generated by a second processing system redundant to a first processing system generating a pilot forward display, the method comprising:
identifying a measured value for a parameter based on sensor data obtained via a sensing arrangement;
extracting, from a first frame of image data of the pilot forward display generated by the first processing system for presentation on a first display device on a pilot side of a cockpit of an aircraft, a first plurality of characters displayed within the first frame;
verifying the first plurality of characters includes a character subset comprising one or more displayed characters matching the measured value;
extracting, from a second frame of image data of the co-pilot forward display generated by the second processing system for presentation on a second display device on a co-pilot side of the cockpit, a second plurality of characters displayed within the second frame; and
automatically generating an alert in response to an absence of a second character subset within the second plurality of characters that matches the character subset matching the measured value from the pilot forward display.

12. The method of claim 11, wherein:
the second processing system is configurable to generate the co-pilot forward display based on second sensor data obtained for the parameter via a second sensing arrangement redundant to the sensing arrangement; and
automatically generating the alert comprises automatically generating the alert when the second plurality of characters displayed within the second frame of image data of the co-pilot forward display includes the second character subset for the parameter different from the character subset matching the measured value for the parameter from the pilot forward display.

13. A computer-readable medium having computer-executable instructions stored thereon that, when executed by a processing system, cause the processing system to:
identify a measured value for a parameter based on sensor data obtained via a sensing arrangement;
extract, from a first frame of image data generated by a first processing system for presentation on a first display device, a first plurality of characters displayed within the first frame;
extract, from a second frame of second image data generated by a second processing system for presentation on a second display device concurrent to the first frame of image data, a second plurality of characters displayed within the second frame;
verify the first plurality of characters includes a first set of one or more displayed characters corresponding to the measured value; and
after verifying the first plurality of characters includes the first set of one or more displayed characters corresponding to the measured value:
verify whether the second plurality of characters includes a second set of one or more displayed characters corresponding to the first set of one or more displayed characters; and
generate an alert in response to an absence of the second set of one or more displayed characters corresponding to the first set of one or more displayed characters within the second plurality of displayed characters.

14. The computer-readable medium of claim 13, wherein the second processing system is configurable to generate the second image data for presentation on the second display device based on second sensor data for the parameter obtained via a second sensing arrangement redundant to the sensing arrangement.

15. The computer-readable medium of claim 13, wherein the first processing system is configurable to render the first set of one or more displayed characters corresponding to the measured value for the parameter at a first position within the first frame of image data and the second processing system is configurable to render the second set of one or more displayed characters corresponding to the parameter at a second position within the second frame of second image data, wherein the first position and the second position are different.

## Patentansprüche

1. Verfahren zum Überwachen von Bildern, die durch ein zweites Verarbeitungssystem, das zu einem ersten Verarbeitungssystem redundant ist, erzeugt werden, das Verfahren umfassend:
Identifizieren eines gemessenen Wertes für einen Parameter auf Basis von Sensordaten, die über eine Erfassungsanordnung erhalten werden;
Extrahieren, aus einem ersten Frame von Bilddaten, die durch das erste Verarbeitungssystem zur Präsentation auf einer ersten Anzeigevorrichtung erzeugt wurden, einer ersten Vielzahl von Zeichen, die innerhalb des ersten Frames angezeigt werden;
Extrahieren, aus einem zweiten Frame von zweiten Bilddaten, die durch das zweite Verarbeitungssystem zur Präsentation auf einer zweiten Anzeigevorrichtung gleichzeitig zu dem ersten Frame von Bilddaten erzeugt wurden, einer zweiten Vielzahl von Zeichen, die innerhalb des zweiten Frames angezeigt werden;
Verifizieren, dass die erste Vielzahl von Zeichen einen ersten Satz von einem oder mehreren angezeigten Zeichen beinhaltet, die dem gemessenen Wert entsprechen; und
nach dem Verifizieren, dass die erste Vielzahl von Zeichen den ersten Satz von einem oder mehreren angezeigten Zeichen beinhaltet, die dem gemessenen Wert entsprechen:
Verifizieren, ob die zweite Vielzahl von Zeichen einen zweiten Satz von einem oder mehreren angezeigten Zeichen beinhaltet, die dem ersten Satz von einem oder mehreren angezeigten Zeichen entsprechen; und
Erzeugen eines Alarms als Antwort auf ein Nichtvorhandensein des zweiten Satzes von einem oder mehreren angezeigten Zeichen, die dem ersten Satz von einem oder mehreren angezeigten Zeichen entsprechen, innerhalb der zweiten Vielzahl von angezeigten Zeichen.

2. Verfahren nach Anspruch 1, wobei das erste Verarbeitungssystem dazu konfigurierbar ist, den ersten Satz von einem oder mehreren angezeigten Zeichen, die dem gemessenen Wert entsprechen, an einer ersten Stelle innerhalb des ersten Frames von Bilddaten wiederzugeben, und das zweite Verarbeitungssystem dazu konfigurierbar ist, den zweiten Satz von einem oder mehreren angezeigten Zeichen, die dem Parameter entsprechen, an einer zweiten Stelle innerhalb des zweiten Frames von zweiten Bilddaten wiederzugeben, wobei die erste Stelle und die zweite Stelle unterschiedliche sind.

3. Verfahren nach Anspruch 1, wobei das Erzeugen des Alarms das Augmentieren der durch das erste Verarbeitungssystem erzeugten Bilddaten umfasst, um eine graphische Benutzerbenachrichtigung nahe zu dem ersten Satz von einem oder mehreren angezeigten Zeichen, die dem gemessenen Wert entsprechen, zu beinhalten.

4. Verfahren nach Anspruch 1, wobei das Erzeugen des Alarms das Augmentieren der durch das zweite Verarbeitungssystem erzeugten zweiten Bilddaten umfasst, um eine graphische Benutzerbenachrichtigung nahe zu dem zweiten Satz von einem oder mehreren angezeigten Zeichen, die dem gemessenen Wert entsprechen, zu beinhalten.

5. Verfahren nach Anspruch 1, wobei das Erzeugen des Alarms das Erzeugen eines akustischen Alarms umfasst.

6. Verfahren nach Anspruch 1, wobei:
das Extrahieren der ersten Vielzahl von Zeichen, die innerhalb des ersten Frames angezeigt werden, das Durchführen einer Zeichenerkennung an dem ersten Frame von Bilddaten umfasst, um die erste Vielzahl von Zeichen zu erhalten; und
das Extrahieren der zweiten Vielzahl von Zeichen, die innerhalb des zweiten Frames angezeigt werden, das Durchführen einer Zeichenerkennung an dem zweiten Frame von zweiten Bilddaten umfasst, um die zweite Vielzahl von Zeichen zu erhalten.

7. Verfahren nach Anspruch 6, wobei das Verifizieren, dass die erste Vielzahl von Zeichen den ersten Satz von einem oder mehreren angezeigten Zeichen beinhaltet, die dem gemessenen Wert entsprechen, das Identifizieren eines extrahierten Zeichenteilsatzes innerhalb der ersten Vielzahl von Zeichen, der mit dem gemessenen Wert für den Parameter übereinstimmt, umfasst.

8. Verfahren nach Anspruch 7, wobei das Verifizieren, ob die zweite Vielzahl von Zeichen den zweiten Satz von einem oder mehreren angezeigten Zeichen beinhaltet, das Validieren des zweiten Frames von zweiten Bilddaten als Antwort auf das Identifizieren eines zweiten extrahierten Zeichenteilsatzes innerhalb der zweiten Vielzahl von Zeichen, der mit dem extrahierten Zeichenteilsatz übereinstimmt, umfasst.

9. Verfahren nach Anspruch 7, wobei das Erzeugen des Alarms das Erzeugen des Alarms als Antwort auf ein Nichtvorhandensein eines zweiten extrahierten Zeichenteilsatzes innerhalb der zweiten Vielzahl von Zeichen, der mit dem extrahierten Zeichenteilsatz übereinstimmt, umfasst.

10. Verfahren nach Anspruch 1, wobei das zweite Verarbeitungssystem dazu konfigurierbar ist, die zweiten Bilddaten zur Präsentation auf der zweiten Anzeigevorrichtung auf Basis von zweiten Sensordaten zu erzeugen, die über eine zweite Erfassungsanordnung erhalten werden, die redundant zu der Erfassungsanordnung ist.

11. Verfahren zum Überwachen einer vor dem Copiloten angeordneten Anzeige, die durch ein zweites Verarbeitungssystem erzeugt wird, das redundant zu einem ersten Verarbeitungssystem ist, das eine vor dem Piloten angeordnete Anzeige erzeugt, das Verfahren umfassend:
Identifizieren eines gemessenen Wertes für einen Parameter auf Basis von Sensordaten, die über eine Erfassungsanordnung erhalten werden;
Extrahieren, aus einem ersten Frame von Bilddaten der durch das erste Verarbeitungssystem zur Präsentation auf einer ersten Anzeigevorrichtung auf einer Pilotenseite eines Cockpits eines Flugzeugs erzeugten vor dem Piloten angeordneten Anzeige, einer ersten Vielzahl von Zeichen, die innerhalb des ersten Frames angezeigt werden;
Verifizieren, dass die erste Vielzahl von Zeichen einen ersten Zeichenteilsatz beinhaltet, der ein oder mehrere angezeigte Zeichen umfasst, die mit dem gemessenen Wert übereinstimmen;
Extrahieren, aus einem zweiten Frame von Bilddaten der durch das zweite Verarbeitungssystem zur Präsentation auf einer zweiten Anzeigevorrichtung auf einer Copilotenseite des Cockpits erzeugten vor dem Copiloten angeordneten Anzeige, einer zweiten Vielzahl von Zeichen, die innerhalb des zweiten Frames angezeigt werden; und
automatisches Erzeugen eines Alarms als Antwort auf ein Nichtvorhandensein eines zweiten Zeichenteilsatzes innerhalb der zweiten Vielzahl von Zeichen, der mit dem Zeichenteilsatz übereinstimmt, der mit dem gemessenen Wert von der vor dem Piloten angeordneten Anzeige übereinstimmt.

12. Verfahren nach Anspruch 11, wobei:
das zweite Verarbeitungssystem dazu konfigurierbar ist, die vor dem Copiloten angeordnete Anzeige auf Basis von zweiten Sensordaten zu erzeugen, die für den Parameter über eine zweite Erfassungsanordnung erhalten werden, die redundant zu der Erfassungsanordnung ist; und
das automatische Erzeugen des Alarms das automatische Erzeugen des Alarms umfasst, wenn die zweite Vielzahl von Zeichen, die innerhalb des zweiten Frames von Bilddaten der vor dem Copiloten angeordneten Anzeige angezeigt werden, den zweiten Zeichenteilsatz für den Parameter beinhaltet, der sich von dem Zeichenteilsatz unterscheidet, der mit dem gemessenen Wert für den Parameter von der vor dem Piloten angeordneten Anzeige übereinstimmt.

13. Computerlesbares Medium, das darauf gespeicherte computerausführbare Anweisungen aufweist, die bei ihrer Ausführung durch ein Verarbeitungssystem das Verarbeitungssystem dazu veranlassen:
einen gemessenen Wert für einen Parameter auf Basis von Sensordaten zu identifizieren, die über eine Erfassungsanordnung erhalten werden;
aus einem ersten Frame von durch ein erstes Verarbeitungssystem zur Präsentation auf einer ersten Anzeigevorrichtung erzeugten Bilddaten eine erste Vielzahl von Zeichen zu extrahieren, die innerhalb des ersten Frames angezeigt werden;
aus einem zweiten Frame von durch ein zweites Verarbeitungssystem zur Präsentation auf einer zweiten Anzeigevorrichtung erzeugten zweiten Bilddaten eine zweite Vielzahl von Zeichen zu extrahieren, die innerhalb des zweiten Frames angezeigt werden;
zu verifizieren, dass die erste Vielzahl von Zeichen einen ersten Satz von einem oder mehreren angezeigten Zeichen beinhaltet, die dem gemessenen Wert entsprechen; und
nach dem Verifizieren, dass die erste Vielzahl von Zeichen den ersten Satz von einem oder mehreren angezeigten Zeichen beinhaltet, die dem gemessenen Wert entsprechen:
zu verifizieren, ob die zweite Vielzahl von Zeichen einen zweiten Satz von einem oder mehreren angezeigten Zeichen beinhaltet, die dem ersten Satz von einem oder mehreren angezeigten Zeichen entsprechen; und
einen Alarm als Antwort auf ein Nichtvorhandensein des zweiten Satzes von einem oder mehreren angezeigten Zeichen zu erzeugen, die dem ersten Satz von einem oder mehreren angezeigten Zeichen innerhalb der zweiten Vielzahl von angezeigten Zeichen entsprechen.

14. Computerlesbares Medium nach Anspruch 13, wobei das zweite Verarbeitungssystem dazu konfigurierbar ist, die zweiten Bilddaten zur Präsentation auf der zweiten Anzeigevorrichtung auf Basis von zweiten Sensordaten für den Parameter zu erzeugen, die über eine zweite Erfassungsanordnung erhalten werden, die redundant zu der Erfassungsanordnung ist.

15. Computerlesbares Medium nach Anspruch 13, wobei das erste Verarbeitungssystem dazu konfigurierbar ist, den ersten Satz von einem oder mehreren angezeigten Zeichen, die dem gemessenen Wert für den Parameter entsprechen, an einer ersten Position innerhalb des ersten Frames von Bilddaten wiederzugeben, und das zweite Verarbeitungssystem dazu konfigurierbar ist, den zweiten Satz von einem oder mehreren angezeigten Zeichen, die dem Parameter entsprechen, an einer zweiten Position innerhalb des zweiten Frames von zweiten Bilddaten wiederzugeben, wobei die erste Position und die zweite Position unterschiedlich sind.

## Revendications

1. Procédé de surveillance d'images générées par un deuxième système de traitement redondant avec un premier système de traitement, le procédé comprenant :
l'identification d'une valeur mesurée pour un paramètre en fonction de données de capteur obtenues par l'intermédiaire d'un agencement capteur ;
l'extraction, à partir d'une première trame de données d'image générée par le premier système de traitement pour une présentation sur un premier dispositif d'affichage, d'une première pluralité de caractères affichés dans la première trame ;
l'extraction, à partir d'une deuxième trame de deuxièmes données d'image générée par le deuxième système de traitement pour une présentation sur un deuxième dispositif d'affichage simultanément à la première trame de données d'image, d'une deuxième pluralité de caractères affichés dans la deuxième trame ;
la vérification que la première pluralité de caractères inclut un premier ensemble d'un ou plusieurs caractères affichés correspondant à la valeur mesurée ; et
après la vérification que la première pluralité de caractères inclut le premier ensemble d'un ou plusieurs caractères affichés correspondant à la valeur mesurée :
la vérification du fait que la deuxième pluralité de caractères inclut un deuxième ensemble d'un ou plusieurs caractères affichés correspondant au premier ensemble d'un ou plusieurs caractères affichés ; et
la génération d'une alerte en réponse à l'absence du deuxième ensemble d'un ou plusieurs caractères affichés correspondant au premier ensemble d'un ou plusieurs caractères affichés dans la deuxième pluralité de caractères affichés.

2. Procédé selon la revendication 1, dans lequel le premier système de traitement est configurable pour rendre le premier ensemble d'un ou plusieurs caractères affichés correspondant à la valeur mesurée au niveau d'un premier emplacement dans la première trame de données d'image et le deuxième système de traitement est configurable pour rendre le deuxième ensemble d'un ou plusieurs caractères affichés correspondant au paramètre au niveau d'un deuxième emplacement dans la deuxième trame de deuxièmes données d'image, dans lequel le premier emplacement et le deuxième emplacement sont différents.

3. Procédé selon la revendication 1, dans lequel la génération de l'alerte comprend l'augmentation des données d'image générées par le premier système de traitement pour inclure une notification graphique d'utilisateur à proximité du premier ensemble d'un ou plusieurs caractères affichés correspondant à la valeur mesurée.

4. Procédé selon la revendication 1, dans lequel la génération de l'alerte comprend l'augmentation des deuxièmes données d'image générées par le deuxième système de traitement pour inclure une notification graphique d'utilisateur à proximité du deuxième ensemble d'un ou plusieurs caractères affichés correspondant à la valeur mesurée.

5. Procédé selon la revendication 1, dans lequel la génération de l'alerte comprend la génération d'une alerte sonore.

6. Procédé selon la revendication 1, dans lequel :
l'extraction de la première pluralité de caractères affichés dans la première trame comprend la réalisation d'une reconnaissance de caractères sur la première trame de données d'image pour obtenir la première pluralité de caractères ; et
l'extraction de la deuxième pluralité de caractères affichés dans la deuxième trame comprend la réalisation d'une reconnaissance de caractères sur la deuxième trame de deuxièmes données d'image pour obtenir la deuxième pluralité de caractères.

7. Procédé selon la revendication 6, dans lequel la vérification que la première pluralité de caractères inclut le premier ensemble d'un ou plusieurs caractères affichés correspondant à la valeur mesurée comprend l'identification d'un sous-ensemble de caractères extraits dans la première pluralité de caractères qui correspond à la valeur mesurée pour le paramètre.

8. Procédé selon la revendication 7, dans lequel la vérification du fait que la deuxième pluralité de caractères inclut le deuxième ensemble d'un ou plusieurs caractères affichés comprend la validation de la deuxième trame de deuxièmes données d'image en réponse à l'identification d'un deuxième sous-ensemble de caractères extraits dans la deuxième pluralité de caractères qui correspond au sous-ensemble de caractères extraits.

9. Procédé selon la revendication 7, dans lequel la génération de l'alerte comprend la génération de l'alerte en réponse à l'absence d'un deuxième sous-ensemble de caractères extraits dans la deuxième pluralité de caractères qui correspond au sous-ensemble de caractères extraits.

10. Procédé selon la revendication 1, dans lequel le deuxième système de traitement est configurable pour générer les deuxièmes données d'image pour une présentation sur le deuxième dispositif d'affichage en fonction de deuxièmes données de capteur obtenues par l'intermédiaire d'un deuxième agencement capteur redondant avec l'agencement capteur.

11. Procédé de surveillance d'un affichage direct de copilote généré par un deuxième système de traitement redondant avec un premier système de traitement générant un affichage direct de pilote, le procédé comprenant :
l'identification d'une valeur mesurée pour un paramètre en fonction de données de capteur obtenues par l'intermédiaire d'un agencement capteur ;
l'extraction, à partir d'une première trame de données d'image de l'affichage direct de pilote générée par le premier système de traitement pour une présentation sur un premier dispositif d'affichage sur un côté pilote d'un cockpit d'un aéronef, d'une première pluralité de caractères affichés dans la première trame ;
la vérification que la première pluralité de caractères inclut un sous-ensemble de caractères comprenant un ou plusieurs caractères affichés correspondant à la valeur mesurée ;
l'extraction, à partir d'une deuxième trame de données d'image de l'affichage direct de copilote générée par le deuxième système de traitement pour une présentation sur un deuxième dispositif d'affichage sur un côté copilote du cockpit, d'une deuxième pluralité de caractères affichés dans la deuxième trame ; et
la génération automatique d'une alerte en réponse à l'absence d'un deuxième sous-ensemble de caractères dans la deuxième pluralité de caractères qui correspond au sous-ensemble de caractères correspondant à la valeur mesurée à partir de l'affichage direct de pilote.

12. Procédé selon la revendication 11, dans lequel :
le deuxième système de traitement est configurable pour générer l'affichage direct de copilote en fonction de deuxièmes données de capteur obtenues pour le paramètre par l'intermédiaire d'un deuxième agencement capteur redondant avec l'agencement capteur ; et
la génération automatique de l'alerte comprend la génération automatique de l'alerte lorsque la deuxième pluralité de caractères affichés dans la deuxième trame de données d'image de l'affichage direct de copilote inclut le deuxième sous-ensemble de caractères pour le paramètre différent du sous-ensemble de caractères correspondant à la valeur mesurée pour le paramètre à partir de l'affichage direct de pilote.

13. Support lisible par ordinateur sur lequel sont stockées des instructions exécutables par ordinateur qui, lorsqu'elles sont exécutées par un système de traitement, amènent le système de traitement à :
identifier une valeur mesurée pour un paramètre en fonction de données de capteur obtenues par l'intermédiaire d'un agencement capteur ;
extraire, à partir d'une première trame de données d'image générée par un premier système de traitement pour une présentation sur un premier dispositif d'affichage, une première pluralité de caractères affichés dans la première trame ;
extraire, à partir d'une deuxième trame de deuxièmes données d'image générée par un deuxième système de traitement pour une présentation sur un deuxième dispositif d'affichage simultanément à la première trame de données d'image, une deuxième pluralité de caractères affichés dans la deuxième trame ;
vérifier que la première pluralité de caractères inclut un premier ensemble d'un ou plusieurs caractères affichés correspondant à la valeur mesurée ; et
après la vérification que la première pluralité de caractères inclut le premier ensemble d'un ou plusieurs caractères affichés correspondant à la valeur mesurée :
vérifier le fait que la deuxième pluralité de caractères inclut un deuxième ensemble d'un ou plusieurs caractères affichés correspondant au premier ensemble d'un ou plusieurs caractères affichés ; et
générer une alerte en réponse à l'absence du deuxième ensemble d'un ou plusieurs caractères affichés correspondant au premier ensemble d'un ou plusieurs caractères affichés dans la deuxième pluralité de caractères affichés.

14. Support lisible par ordinateur selon la revendication 13, dans lequel le deuxième système de traitement est configurable pour générer les deuxièmes données d'image pour une présentation sur le deuxième dispositif d'affichage en fonction de deuxièmes données de capteur pour le paramètre obtenues par l'intermédiaire d'un deuxième agencement capteur redondant avec l'agencement capteur.

15. Support lisible par ordinateur selon la revendication 13, dans lequel le premier système de traitement est configurable pour rendre le premier ensemble d'un ou plusieurs caractères affichés correspondant à la valeur mesurée pour le paramètre au niveau d'une première position dans la première trame de données d'image et le deuxième système de traitement est configurable pour rendre le deuxième ensemble d'un ou plusieurs caractères affichés correspondant au paramètre au niveau d'une deuxième position dans la deuxième trame de deuxièmes données d'image, dans lequel la première position et la deuxième position sont différentes.
